(19) Europäisches Patentamt
European Patent Office
Office européen des brevets

(11) Veröffentlichungsnummer : **0 458 746 A1**

(12) **EUROPÄISCHE PATENTANMELDUNG**

(21) Anmeldenummer : **91810369.8**

(51) Int. Cl.[5] : **C09B 29/36**, C09B 29/00

(22) Anmeldetag : **14.05.91**

(30) Priorität : **22.05.90 CH 1732/90**

(43) Veröffentlichungstag der Anmeldung :
**27.11.91 Patentblatt 91/48**

(84) Benannte Vertragsstaaten :
**BE CH DE ES FR GB IT LI**

(71) Anmelder : **CIBA-GEIGY AG**
**Klybeckstrasse 141**
**CH-4002 Basel (CH)**

(72) Erfinder : **Walter, Harald, Dr.**
**Rufacherstrasse 20**
**CH-4055 Basel (CH)**
Erfinder : **Rigassi, Thomas**
**Weidstrasse 17c**
**CH-4800 Zofingen (CH)**

(54) **Azofarbstoffe, Verfahren zu deren Herstellung und deren Verwendung.**

(57) Azofarbstoffe der Formel

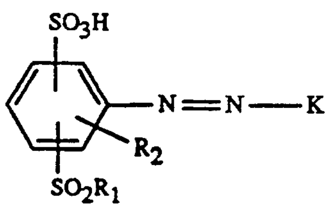

(1),

worin $R_1$ gegebenenfalls substituiertes $C_1$-$C_8$-Alkyl oder -$N(R_9)R_{10}$, wobei $R_9$ und $R_{10}$ unabhängig voneinander Wasserstoff, gegebenenfalls substituiertes $C_1$-$C_8$-Alkyl, Phenyl oder Naphthyl sind, $R_2$ Wasserstoff, Halogen, gegebenenfalls substituiertes $C_1$-$C_8$-Alkyl oder $C_1$-$C_8$-Alkoxy und K der Rest einer Kupplungskomponente der Formel

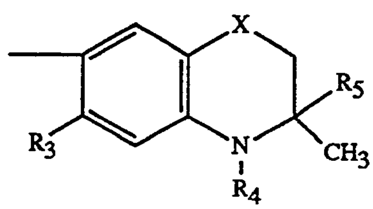

(2) oder

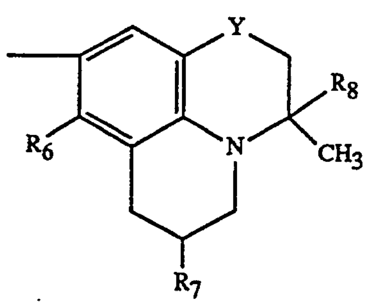

(3) ist,

worin $R_3$ und $R_6$ unabhängig voneinander Wasserstoff, gegebenenfalls substituiertes $C_1$-$C_8$-Alkyl, $C_1$-$C_8$-Alkoxy, Phenoxy oder $C_2$-$C_4$-Alkanoylamino, $R_4$ gegebenenfalls substituiertes $C_1$-$C_8$-Alkyl, $R_5$ und $R_8$ unabhängig voneinander Wasserstoff oder gegebenenfalls substituiertes $C_1$-$C_8$-Alkyl, $R_7$ Wasserstoff,

EP 0 458 746 A1

Hydroxy, Halogen oder $C_1$-$C_8$-Alkoxy, -O- oder $-CHR_{11}-$ und Y -O-, $-CHR_{11}-$ oder die direkte Bindung ist, wobei $R_{11}$ Wasserstoff oder gegebenenfalls substituiertes $C_1$-$C_8$-Alkyl bedeutet, ergeben auf stickstoffhaltigen oder hydroxylgruppenhaltigen Fasermaterialien Färbungen von guten Echtheiten.

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Gegenstand der vorliegenden Erfindung sind Azofarbstoffe der Formel

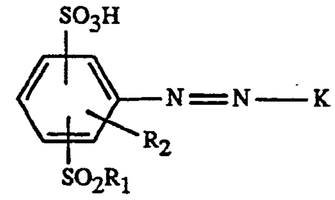

(1),

worin $R_1$ gegebenenfalls substituiertes $C_1$-$C_8$-Alkyl oder -$N(R_9)R_{10}$, wobei $R_9$ und $R_{10}$ unabhängig voneinander Wasserstoff, gegebenenfalls substituiertes $C_1$-$C_8$-Alkyl, Phenyl oder Naphthyl sind, $R_2$ Wasserstoff, Halogen, gegebenenfalls substituiertes $C_1$-$C_8$-Alkyl oder $C_1$-$C_8$-Alkoxy und K der Rest einer Kupplungskomponente der Formel

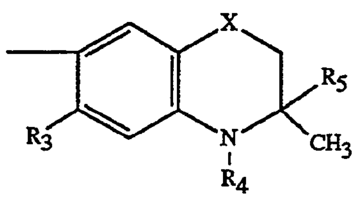

(2) oder

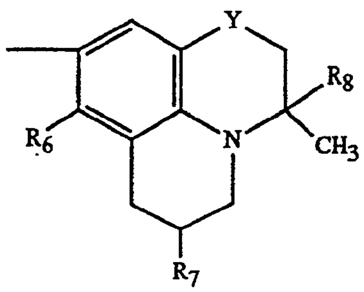

(3) ist,

worin $R_3$ und $R_6$ unabhängig voneinander Wasserstoff, gegebenenfalls substituiertes $C_1$-$C_8$-Alkyl, $C_1$-$C_8$-Alkoxy, Phenoxy oder $C_2$-$C_4$-Alkanoylamino, $R_4$ gegebenenfalls substituiertes $C_1$-$C_8$-Alkyl, $R_5$ und $R_8$ unabhängig voneinander Wasserstoff oder gegebenenfalls substituiertes $C_1$-$C_8$-Alkyl, $R_7$ Wasserstoff, Hydroxy, Halogen oder $C_1$-$C_8$-Alkoxy, X -O- oder -$CHR_{11}$- und Y -O-, -$CHR_{11}$- oder die direkte Bindung ist, wobei $R_{11}$ Wasserstoff oder gegebenenfalls substituiertes $C_1$-$C_8$-Alkyl bedeutet.

Als $C_1$-$C_8$-Alkyl kommen für $R_1$, $R_2$, $R_3$, $R_4$, $R_5$, $R_6$, $R_8$, $R_9$, $R_{10}$ und $R_{11}$ unabhängig voneinander z.B. Methyl, Aethyl, Propyl, Isopropyl, Butyl, Isobutyl, sek.-Butyl, tert.-Butyl, Pentyl, Hexyl, Heptyl oder Octyl, sowie die entsprechenden Reste, die z.B. durch Hydroxy, $C_1$-$C_4$-Alkoxy, wie z.B. Methoxy, Aethoxy, Propoxy, Isopropoxy oder Butoxy, Sulfo, Sulfato, Thiosulfato, Cyan oder Halogen, wie z.B. Fluor, Chlor oder Brom, substituiert sind, in Betracht. Der Rest $R_4$ kann als $C_1$-$C_8$-Alkyl, insbesondere als Methyl, ausserdem durch Phenyl substituiert sein, wobei der Phenylrest z.B. durch $C_1$-$C_4$-Alkyl, wie z.B. Methyl oder Aethyl, $C_1$-$C_4$-Alkoxy, wie z.B. Methoxy oder Aethoxy, $C_2$-$C_4$-Alkanoylamino, wie z.B. Acetylamino oder Propionylamino, Hydroxy, Sulfo, Sulfato, Thiosulfato, Cyan oder Halogen, wie z.B. Fluor, Chlor oder Brom, weitersubstituiert sein kann.

Als $C_1$-$C_8$-Alkoxy kommen für $R_2$, $R_3$, $R_6$ und $R_7$ unabhängig voneinander z.B. Methoxy, Aethoxy, Propoxy, Isopropoxy, Butoxy, Isobutoxy, sek.-Butoxy, tert.-Butoxy, Pentoxy, Hexyloxy, Heptyloxy oder Octyloxy in Betracht.

Als $C_2$-$C_4$-Alkanoylamino kommen für $R_3$ und $R_6$ unabhängig voneinander z.B. Acetylamino, Propionylamino, Butyrylamino oder Isobutyrylamino, sowie die entsprechenden durch Sulfo, Sulfato oder Thiosulfato substituierten Reste in Betracht.

Als Phenyl und Naphthyl kommen für $R_9$ und $R_{10}$ und als Phenoxy für $R_3$ und $R_6$ unabhängig voneinander neben den oben genannten unsubstituierten Resten die durch $C_1$-$C_4$-Alkyl, wie z.B. Methyl oder Aethyl, $C_1$-$C_4$-Alkoxy, wie z.B. Methoxy oder Aethoxy, $C_2$-$C_4$-Alkanoylamino, wie z.B. Acetylamino oder Propionylamino,

Hydroxy, Sulfo, Sulfato, Thiosulfato, Cyan oder Halogen, wie z.B. Fluor, Chlor oder Brom, substituierten Reste in Betracht.

Als Halogen kommen für $R_2$ und $R_7$ unabhängig voneinander z.B. Fluor, Chlor oder Brom, insbesondere Chlor, in Betracht.

Bevorzugt sind Azofarbstoffe der Formel (1), worin $R_1$ gegebenenfalls im Alkylteil durch Hydroxy substituiertes, vorzugsweise unsubstituiertes, $C_1$-$C_4$-Alkyl, -NH$C_1$-$C_4$-Alkyl oder -N($C_1$-$C_4$-Alkyl)$_2$ ist.

Ebenfalls bevorzugt sind Azofarbstoffe der Formel (1), worin $R_2$ Wasserstoff oder Halogen, insbesondere Chlor, ist.

Ferner sind Azofarbstoffe der Formel (1) bevorzugt, worin $R_3$ Wasserstoff, $C_1$-$C_4$-Alkyl oder $C_2$-$C_4$-Alkanoylamino und $R_5$, $R_6$ und $R_8$ unabhängig voneinander Wasserstoff oder $C_1$-$C_4$-Alkyl sind.

Bevorzugt sind weiterhin Azofarbstoffe der Formel (1), worin X und Y unabhängig voneinander -O- oder -$CHCH_3$- sind. Vorzugsweise sind X und Y -$CHCH_3$-.

Der Rest $R_4$ ist bevorzugt gegebenenfalls durch Hydroxy substituiertes $C_1$-$C_4$-Alkyl, insbesondere gegebenenfalls durch Hydroxy substituiertes Aethyl.

Der Rest $R_7$ ist bevorzugt Wasserstoff oder Hydroxy.

Besonders bevorzugt sind Azofarbstoffe der Formel (1), worin $R_1$ gegebenenfalls im Alkylteil durch Hydroxy substituiertes, vorzugsweise unsubstituiertes, $C_1$-$C_4$-Alkyl, -NH$C_1$-$C_4$-Alkyl oder -N($C_1$-$C_4$-Alkyl)$_2$, $R_2$ Wasserstoff oder Halogen, insbesondere Chlor, $R_3$ Wasserstoff, $C_1$-$C_4$-Alkyl oder $C_2$-$C_4$-Alkanoylamino, $R_4$ gegebenenfalls durch Hydroxy substituiertes $C_1$-$C_4$-Alkyl, $R_5$, $R_6$ und $R_8$ unabhängig voneinander Wasserstoff oder $C_1$-$C_4$-Alkyl, $R_7$ Wasserstoff oder Hydroxy und X und Y unabhängig voneinander -O- oder -$CHCH_3$-, insbesondere -$CHCH_3$-, sind.

Ganz besonders bevorzugt sind Azofarbstoffe der Formel (1), worin $R_1$ $C_1$-$C_4$-Alkyl oder -N($C_1$-$C_4$-Alkyl)$_2$, $R_2$ Wasserstoff oder Halogen, insbesondere Chlor, ist, $R_3$ $C_1$-$C_4$-Alkyl oder $C_2$-$C_4$-Alkanoylamino, $R_4$ gegebenenfalls durch Hydroxy substituiertes $C_1$-$C_4$-Alkyl, $R_5$, $R_6$ und $R_8$ unabhängig voneinander Wasserstoff oder $C_1$-$C_4$-Alkyl, $R_7$ Wasserstoff oder Hydroxy und X und Y unabhängig voneinander -O- oder -$CHCH_3$-, insbesondere -$CHCH_3$-, sind.

Ganz besonders wichtig sind Azofarbstoffe der Formel (1), worin $R_1$ Methyl, Aethyl oder -N($CH_3$)$_2$, $R_2$ Wasserstoff oder Chlor, $R_3$ Methyl oder Propionylamino, $R_4$ gegebenenfalls durch Hydroxy substituiertes Aethyl, $R_5$, $R_6$ und $R_8$ unabhängig voneinander Wasserstoff oder Methyl, $R_7$ Wasserstoff oder Hydroxy und X und Y unabhängig voneinander -O- oder -$CHCH_3$-, insbesondere -$CHCH_3$-, sind.

Von besonderem Interesse sind Azofarbstoffe der Formel (1), worin K der Rest einer Kupplungskomponente der Formel (2) ist, wobei für $R_1$, $R_2$, $R_3$, $R_4$, $R_5$ und X die oben angegebenen Bevorzugungen gelten.

Gegenstand der Erfindung ist ferner ein Verfahren zur Herstellung der Azofarbstoffe der Formel (1), welches dadurch gekennzeichnet ist, dass man ein Amin der Formel

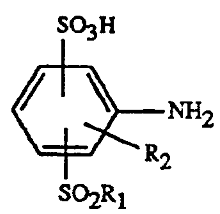

(4),

worin $R_1$ und $R_2$ die unter Formel (1) angegebenen Bedeutungen haben, diazotiert und auf eine Kupplungskomponente der Formel

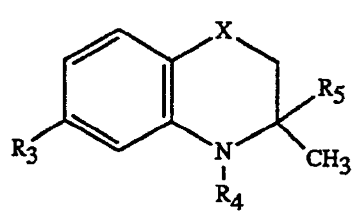

(5) oder

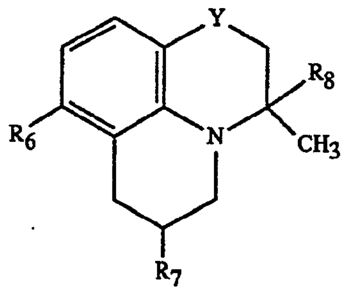 (6),

worin $R_3$, $R_4$, $R_5$, $R_6$, $R_7$, $R_8$, X und Y die unter Formel (1) angegebenen Bedeutungen haben, kuppelt.

Die Diazotierung des Amins der Formel (4) erfolgt in der Regel durch Einwirken salpetriger Säure in wässrig-mineralsaurer Lösung bei tiefer Temperatur, die Kupplung auf die Kupplungskomponente der Formel (5) oder (6) bei sauren bis neutralen pH-Werten, insbesondere bei einem pH-Wert von 1 bis 5.

Gegebenenfalls kann nach der Kupplung eine freie Aminogruppe im Azofarbstoff der Formel (1) mit einem Acylierungs- oder Alkylierungsmittel in eine Acylamino- oder Alkylaminogruppe umgewandelt werden, und ebenso kann eine geeignete Hydroxygruppe durch Alkylierung in eine Alkoxygruppe überführt werden. Ferner kann eine freie aliphatische Hydroxygruppe in eine wasserlöslichmachende Gruppe, wie z.B. durch Sulfatierung in eine Sulfatogruppe, überführt werden.

Bevorzugte Ausführungsformen des erfindungsgemässen Verfahrens sind dadurch gekennzeichnet, dass man

- ein Amin der Formel (4) verwendet, worin $R_1$ gegebenenfalls im Alkylteil durch Hydroxy substituiertes, vorzugsweise unsubstituiertes, $C_1$-$C_4$-Alkyl, -NH$C_1$-$C_4$-Alkyl oder -N($C_1$-$C_4$-Alkyl$)_2$ ist;
- ein Amin der Formel (4) verwendet, worin $R_2$ Wasserstoff oder Halogen, insbesondere Chlor, ist;
- eine Kupplungskomponente der Formel (5) oder (6) verwendet, worin $R_3$ Wasserstoff, $C_1$-$C_4$-Alkyl oder $C_2$-$C_4$-Alkanoylamino und $R_5$, $R_6$ und $R_8$ unabhängig voneinander Wasserstoff oder $C_1$-$C_4$-Alkyl sind;
- eine Kupplungskomponente der Formel (5) oder (6) verwendet, worin X und Y unabhängig voneinander -O- oder -$CHCH_3$- sind, vorzugsweise worin X und Y -$CHCH_3$- sind;
- eine Kupplungskomponente der Formel (5) verwendet, worin $R_4$ gegebenenfalls durch Hydroxy substituiertes $C_1$-$C_4$-Alkyl, insbesondere gegebenenfalls durch Hydroxy substituiertes Aethyl, ist;
- eine Kupplungskomponente der Formel (6) verwendet, worin $R_7$ Wasserstoff oder Hydroxy ist.

Eine besonders bevorzugte Ausführungsform des erfindungsgemässen Verfahrens ist dadurch gekennzeichnet, dass man ein Amin der Formel (4), worin $R_1$ gegebenenfalls im Alkylteil durch Hydroxy substituiertes, vorzugsweise unsubstituiertes, $C_1$-$C_4$-Alkyl, -NH$C_1$-$C_4$-Alkyl oder -N($C_1$-$C_4$-Alkyl$)_2$ und $R_2$ Wasserstoff oder Halogen, insbesondere Chlor, ist, diazotiert und auf eine Kupplungskomponente der Formel (5) oder (6), worin $R_3$ Wasserstoff, $C_1$-$C_4$-Alkyl oder $C_2$-$C_4$-Alkanoylamino, $R_4$ gegebenenfalls durch Hydroxy substituiertes $C_1$-$C_4$-Alkyl, $R_5$, $R_6$ und $R_3$ unabhängig voneinander Wasserstoff oder $C_1$-$C_4$-Alkyl, $R_7$ Wasserstoff oder Hydroxy und X und Y unabhängig voneinander -O-oder -$CHCH_3$-, insbesondere -$CHCH_3$-, sind, kuppelt.

Eine ganz besonders bevorzugte Ausführungsform des erfindungsgemässen Verfahrens ist dadurch gekennzeichnet, dass man ein Amin der Formel (4), worin $R_1$ $C_1$-$C_4$-Alkyl oder -N($C_1$-$C_4$-Alkyl$)_2$ und $R_2$ Wasserstoff oder Halogen, insbesondere Chlor, ist, diazotiert und auf eine Kupplungskomponente der Formel (5) oder (6), worin $R_3$ $C_1$-$C_4$-Alkyl oder $C_2$-$C_4$-Alkanoylamino, $R_4$ gegebenenfalls durch Hydroxy substituiertes $C_1$-$C_4$-Alkyl, $R_5$, $R_6$ und $R_8$ unabhängig voneinander Wasserstoff oder $C_1$-$C_4$-Alkyl, $R_7$ Wasserstoff oder Hydroxy und X und Y unabhängig voneinander -O- oder -$CHCH_3$-, insbesondere -$CHCH_3$-, sind, kuppelt.

Eine ganz besonders wichtige Ausführungsform des erfindungsgemässen Verfahrens ist dadurch gekennzeichnet, dass man ein Amin der Formel (4), worin $R_1$ Methyl, Aethyl oder -N($CH_3$$)_2$ und $R_2$ Wasserstoff oder Chlor ist, diazotiert und auf eine Kupplungskomponente der Formel (5) oder (6), worin $R_3$ Methyl oder Propionylamino, $R_4$ gegebenenfalls durch Hydroxy substituiertes Aethyl, $R_5$, $R_6$ und $R_8$ unabhängig voneinander Wasserstoff oder Methyl, $R_7$ Wasserstoff oder Hydroxy und X und Y unabhängig voneinander -O- oder -$CHCH_3$-, insbesondere -$CHCH_3$-, sind, kuppelt.

In dem erfindungsgemässen Verfahren verwendet man vorzugsweise eine Kupplungskomponente der Formel (2), wobei für $R_1$, $R_2$, $R_3$, $R_4$, $R_5$ und X die oben angegebenen Bevorzugungen gelten.

Die Amine der Formel (4) und die Kupplungskomponenten der Formeln (5) und (6) sind an sich bekannt und können in Analogie zu bekannten Verbindungen hergestellt werden.

So können die Amine der Formel (4) z.B. hergestellt werden, indem man eine Verbindung der Formel

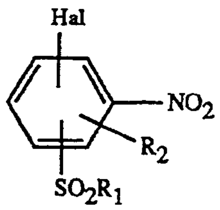

(7),

worin $R_1$ und $R_2$ die unter Formel (1) angegebenen Bedeutungen haben und Hal Halogen, wie z.B. Fluor, Chlor oder Brom, bedeutet, zur Verbindung der Formel

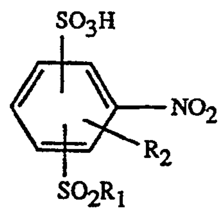

(8)

umsetzt und anschliessend die $NO_2$-Gruppe reduziert.

Die Verfahrensweisen zur Herstellung der Amine der Formel (4) sind an sich bekannt. Die Umsetzung der Verbindung der Formel (7) zur Verbindung der Formel (8) erfolgt in Gegenwart einer die Sulfogruppe einführenden Verbindung, wie z.B. Natriumsulfit, bei einer Temperatur von 70 bis 100°C, in wässrigem Medium. Die Reduktion der Verbindung der Formel (8) erfolgt z.B. mit Wasserstoff in Gegenwart eines Katalysators, wie z.B. Palladium/Kohle, Platin/Kohle oder Eisen, in wässrigem Medium oder in einem organischen Lösungsmittel, wie z.B. Essigsäure, bei einer Temperatur von beispielsweise 20 bis 100°C.

Weiterhin können Amine der Formel (4) erhalten werden, indem man eine Verbindung der Formel

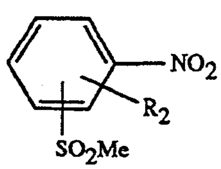

(9),

worin $R_2$ die unter Formel (1) angegebenen Bedeutungen hat und Me ein Kation, wie z.B. Lithium, Natrium oder Kalium, ist, mit einer Verbindung der Formel $R_1$-Z, worin $R_1$ die unter Formel (1) angegebenen Bedeutungen hat und Z eine anionische Abgangsgruppe ist, zur Verbindung der Formel

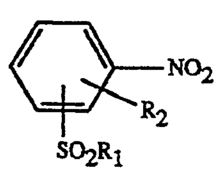

(10)

umsetzt, die $NO_2$-Gruppe reduziert und anschliessend eine Sulfogruppe einführt.

Die Alkylierung der Verbindung der Formel (9) erfolgt in Gegenwart einer Verbindung der Formel $R_1$-Z, worin Z z.B Tosylat oder Halogen, wie Fluor, Chlor oder Brom, ist, in Wasser oder einem organischen Lösungsmittel, wie z.B. Aethanol, Isopropanol, Toluol oder Xylol, bei einer Temperatur von beispielsweise 50 bis 130°C in Gegenwart einer Base, wie z.B. Natriumcarbonat, Kaliumcarbonat oder Magnesiumoxid. Die anschliessende Reduktion der $NO_2$-Gruppe erfolgt wie oben angegeben. Die Einführung der Sulfogruppe erfolgt in konzentrierter Schwefelsäure oder vorzugsweise in Oleum bei einer Temperatur von beispielsweise 60 bis 140°C.

Ausgehend von den nach den obigen Verfahren erhaltenen Aminen der Formel (4), worin $R_2$ Halogen ist, können die analogen Verbindungen, worin $R_2$ Wasserstoff ist, durch Umsetzung mit einer Verbindung der Formel $N(R_{12})_3$, worin $R_{12}$ Alkyl oder Aryl, wie z.B. Methyl, Aethyl, Propyl, Isopropyl, Butyl oder Phenyl, ist, in Gegenwart eines Katalysators, wie z.B. Palladium/Kohle, erhalten werden.

Die Farbstoffe der Formel (1) liegen entweder in der Form ihrer freien Säure oder vorzugsweise als deren

Salze vor.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben oder Bedrucken von Fasermaterialien, insbesondere von stickstoffhaltigen oder hydroxygruppenhaltigen Fasermaterialien, wie z.B. textilen Fasermaterialien aus Cellulose, Polyester, Seide und insbesondere Wolle und synthetischen Polyamiden. Man erhält egale Färbungen mit guten Allgemeinechtheiten, insbesondere guter Reib-, Nass-, Nassreib- und Lichtechtheit. Ferner sind die erfindungsgemässen Farbstoffe sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1: Bei einer Temperatur von ca. 20° werden 20 Teile Schwefelsäure (100%) und 20 Teile Oleum (25%) vorgelegt. Unter Rühren werden innerhalb von 3 Minuten 5,1 Teile 4-Methylsulfonylanilin eingetragen. Danach wird die Innentemperatur auf 120° erhöht und die Reaktionsmischung 4 Stunden bei dieser Temperatur gerührt. Nach Abkühlung auf Raumtemperatur wird die Reaktionsmischung auf ein Gemisch von 150 Teilen Eis und 15 Teilen Natriumchlorid gegossen. Nachdem das Eis vollständig geschmolzen ist wird das erhaltene Produkt kalt abfiltriert. Nach Trocknung im Vakuum bei einer Temperatur von 60° erhält man 3,6 Teile einer leicht bräunlichen Festsubstanz, die in Form der freien Säure der Verbindung der Formel

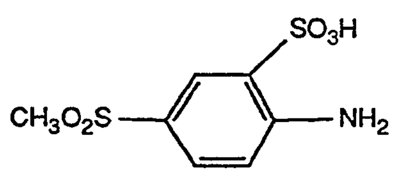

(101)

entspricht.

Beispiel 2: Bei einer Temperatur von ca. 20° werden 20 Teile Schwefelsäure (100%) und 20 Teile Oleum (25%) vorgelegt. Unter Rühren werden innerhalb von 3 Minuten 6,3 Teile 4-Amino-3-chlor-methylsulfonylanilin so eingetragen, dass die Innentemperatur 40° nicht übersteigt. Danach wird die Innentemperatur auf 120° erhöht und die Reaktionsmischung 2 Stunden bei dieser Temperatur gerührt. Nach Abkühlung auf Raumtemperatur wird die Reaktionsmischung in 100 Teile Essigsäureethylester gegeben, wobei die Temperatur unterhalb 25° bleibt. Nach Absaugen des erhaltenen Produktes wird dieses nochmals in 100 Teile Essigester eingetragen und gut verrührt. Nach erneutem Absaugen wird im Vakuum bei einer Temperatur von 40° getrocknet. Man erhält 6,4 Teile einer weissen Festsubstanz, die in Form der freien Säure der Verbindung der Formel

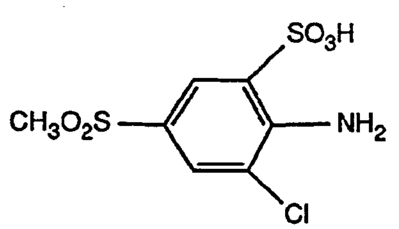

(102)

entspricht. Die erhaltene Verbindung der Formel (102) weist eine flüssigchromatographisch bestimmte Reinheit von 99% auf.

Beispiel 3: Bei einer Temperatur von ca. 20° werden 9,09 Teile 6-Chlor-4-methylsulfonylanilin-2-sulfonsäure in 90 Teilen Wasser gelöst. Es werden 2,76 Teile Triäthylamin und 2 Teile Palladium/Kohle (5% Kohle) zugegeben und 1,5 Stunden bei einer Temperatur von ca. 20 bis 25° unter Normaldruck hydriert. Danach wird der Katalysator abfiltriert und die wässrige Lösung mit 30 Teilen Natriumchlorid versetzt. Es wird 10 Minuten bei ca. 20° gerührt und anschliessend das erhaltene Produkt abgesaugt. Man erhält 4,4 Teile einer weissen Festsubstanz, die in Form der freien Säure der gemäss Beispiel 1 erhaltenen Verbindung der Formel (101) entspricht. Die erhaltene Verbindung der Formel (101) weist eine flüssigchromatographisch bestimmte Reinheit von 99% auf.

Beispiel 4: Bei Raumtemperatur werden 189,7 Teile 4-Chlor-3-nitrophenyläthylsulfon und 141,8 Teile Natriumsulfit in 1125 Teilen Wasser gelöst. Die Innentemperatur wird danach auf 95 bis 100° erhöht und die

Reaktionsmischung 1,5 Stunden bei dieser Temperatur gerührt. Nach dem Abkühlen auf Raumtemperatur gibt man portionsweise 300 Teile Natriumchlorid zu, rührt ca. 30 Minuten nach und saugt das erhaltene Produkt anschliessend ab. Nach Trocknung im Vakuum bei einer Temperatur von 40° erhält man 180,7 Teile einer gelben Festsubstanz, die in Form der freien Säure der Verbindung der Formel

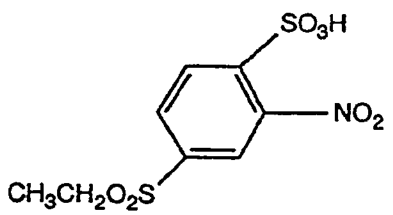

(103)

entspricht. Die erhaltene Verbindung der Formel ( 103) weist eine flüssigchromatographisch bestimmte Reinheit von 98,5% auf.

Beispiele 5 und 6: Verfährt man wie in Beispiel 4 angegeben, verwendet jedoch statt 189,7 Teile 4-Chlor-3-nitrophenyläthylsulfon eine äquimolare Menge 5-Chlor-2-nitrophenylmethylsulfon oder 2,4-Dichlor-5-nitrophenyläthylsulfon, so erhält man die in Form der freien Säure angegebene Verbindung der Formel

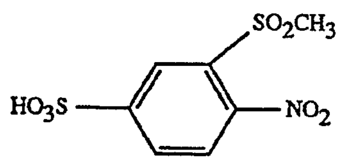

(104) oder

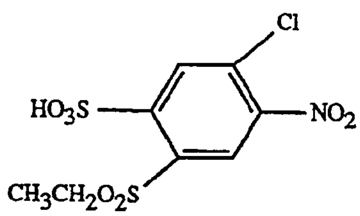

(105).

Beispiel 7: Bei Raumtemperatur werden 348,3 Teile 4-Chlor-3-nitrobenzol-1 -sulfodimethylamid und 141,8 Teile Natriumsulfit in 1125 Teile Wasser gelöst. Danach wird die Innentemperatur auf 95 bis 100° erhöht und die Reaktionsmischung 3 Stunden am Rückfluss erhitzt. Nach dem Abkühlen werden portionsweise 250 Teile Natriumchlorid zugegeben und ca. 30 Minuten nachgerührt. Das erhaltene Produkt wird bei einer Temperatur von ca. 20° abgesaugt. Nach Trocknung im Vakuum bei einer Temperatur von 40° erhält man 293,4 Teile einer gelben Festsubstanz, die in Form der freien Säure der Verbindung der Formel

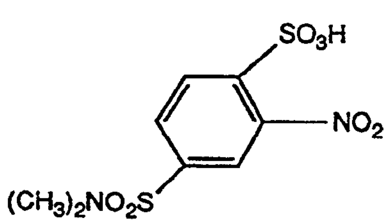

(106)

entspricht. Die erhaltene Verbindung der Formel (106) weist eine flüssigchromatographisch bestimmte Reinheit von 98% auf.

Beispiel 8: Verfährt man wie in Beispiel 7 angegeben, verwendet jedoch statt 348,3 Teile 4-Chlor-3-nitrobenzol-1-sulfodimethylamid eine äquimolare Menge 2,4-Dichlor-5-nitrobenzol-1-sulfodimethylamid, so erhält man die in Form der freien Säure angegebene Verbindung der Formel

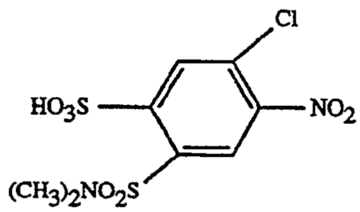

(107).

<u>Beispiel 9:</u> Bei Raumtemperatur werden 7,7 Teile der gemäss Beispiel 7 erhaltenen Verbindung der Formel (106) in 120 Teilen Wasser gelöst. Nach der Zugabe von 0,8 Teilen Palladium/Kohle (5% Palladium) wird 1,5 Stunden bei einer Temperatur von ca. 30 bis 35° und Normaldruck hydriert, wobei nach Aufnahme von 78% $H_2$-Gas der Theorie nochmals 0,8 Teile Palladium/Kohle (5% Palladium) zugesetzt werden. Nach Abfiltrieren des Katalysators wird die Lösung im Wasserstrahlvakuum eingeengt. Man erhält 6 Teile einer weissen Festsubstanz, die in Form der freien Säure der Verbindung der Formel

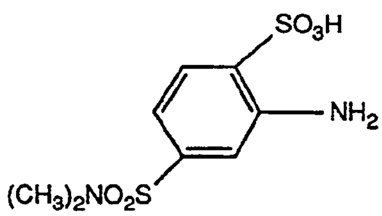

(108)

entspricht. Die erhaltene Verbindung der Formel (108) weist eine flüssigchromatographisch bestimmte Reinheit von 99% auf.

<u>Beispiele 10 bis 13:</u> Verfährt man wie in Beispiel 9 angegeben, verwendet jedoch statt 7,7 Teile der gemäss Beispiel 7 erhaltenen Verbindung der Formel (106) eine äquimolare Menge der Verbindung der Formel (103), (104), (105) oder (107), so erhält man die in Form der freien Säure angegebene Verbindung der Formel

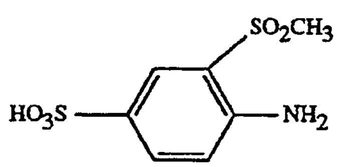

(109),

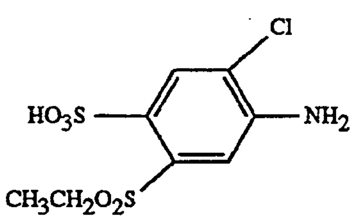

(110),

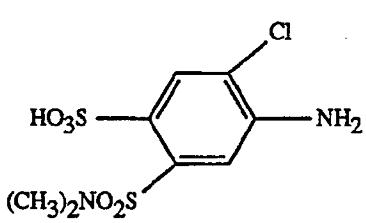

(111) oder

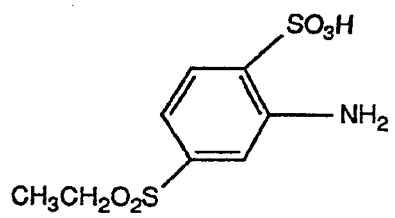

(112).

Beispiel 14: Bei einer Temperatur von ca. 10° werden 3,35 Teile 4-Methylsulfonylanilin-2-sulfonsäure (83%) in ein Gemisch von 30 Teilen Eisessig und 10 Teilen Salzsäure (32%) unter gutem Rühren eingetragen. Danach wird auf eine Temperatur von 0° abgekühlt und eine Lösung von 0,74 Teilen Natriumnitrit in 4 Teilen Wasser innerhalb von ca. 3 Minuten so zugetropft, dass die Innentemperatur 5° nicht überschreitet. Man rührt 2 Stunden bei 0 bis 5° nach, vernichtet den Nitritüberschuss durch Zugabe von 0,5 Teilen Sulfaminsäure und tropft anschliessend 2,4 Teile N-Aethyl-1,2,3,4-tetrahydro-2,2,4,7-tetramethylchinolin innerhalb von 2 Minuten zu. Nach 15 Minuten gibt man 6 Teile Natriumacetat x $3H_2O$ zu, rührt 15 Minuten bei einer Temperatur von 0 bis 5° nach und gibt nochmals 6 Teile Natriumacetat x $3H_2O$ zu. Die Reaktionsmischung wird 2 Stunden bei einer Temperatur von 0 bis 5° gerührt und anschliessend eine Lösung von 6 Teilen Natriumacetat x $3H_2O$, 3 Teilen Natriumcarbonat und 40 Teilen Wasser so zugetropft, dass die Innentemperatur 5° nicht übersteigt. Danach wird die Reaktionsmischung in 75 Teile einer 15%-igen Natriumchlorid-Lösung eingetragen. Nach Filtration und Trocknung im Vakuum bei einer Temperatur von 60° erhält man 4,8 Teile eines roten Pulvers, das in Form der freien Säure dem Farbstoff der Formel

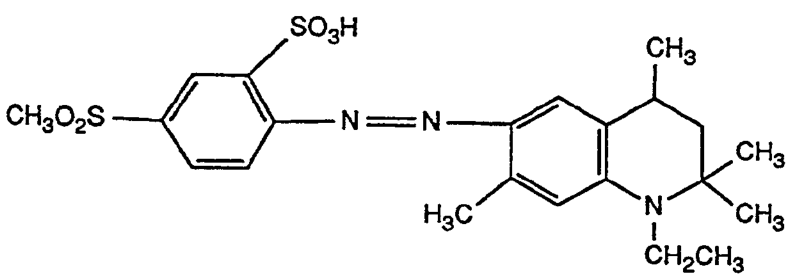

(113)

entspricht. Der Farbstoff der Formel (113) färbt synthetische und natürliche Polyamidmaterialien in gelbstichig roten Farbtönen. Die flüssigchromatographische Analyse ergibt für den Farbstoff der Formel (113) eine Reinheit von 94%.

Beispiele 15 bis 53: Verfährt man wie in Beispiel 14 angegeben, verwendet jedoch statt 3,35 Teile 4-Methylsulfonylanilin-2-sulfonsäure eine äquimolare Menge der in der folgenden Tabelle in Spalte 2 in Form der freien Säure angegebenen Amine, und statt 2,4 Teile N-Aethyl-1,2,3,4-tetrahydro-2,2,4,7-tetramethylchinolin eine äquimolare Menge der in der folgenden Tabelle in Spalte 3 angegebenen Kupplungskomponenten, so erhält man analoge Farbstoffe, die synthetische und natürliche Polyamidmaterialien in den in Spalte 4 angegebenen Farbtönen färben.

Tabelle

| Bsp. | Amin | Kupplungskomponente | Farbton auf natürlichem und synthetischem Polyamid |
|---|---|---|---|
| 15 | 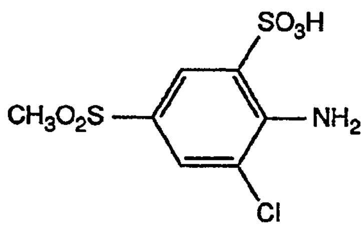 | 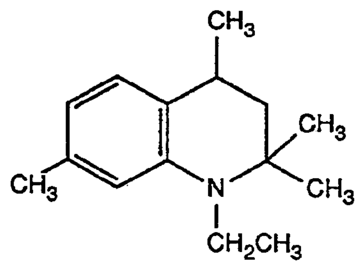 | Orange |
| 16 | 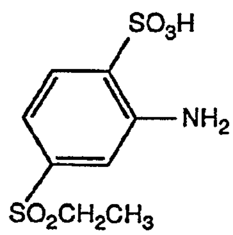 | 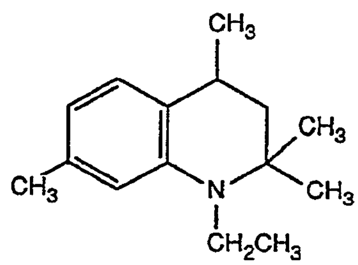 | gelbstichig Rot |
| 17 | 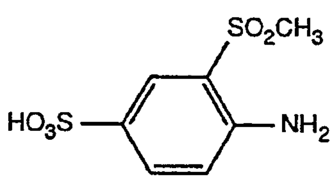 | 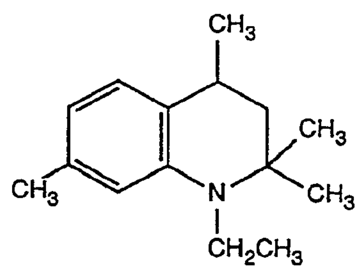 | gelbstichig Rot |
| 18 | 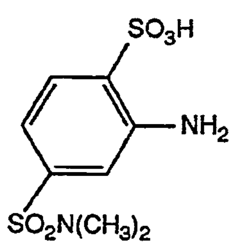 | 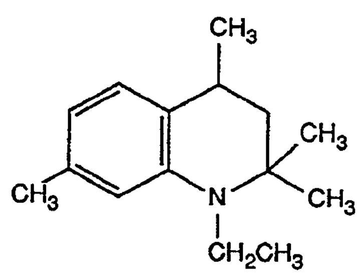 | gelbstichig Rot |

Fortsetzung Tabelle

| Bsp. | Amin | Kupplungskomponente | Farbton auf natürlichem und synthetischem Polyamid |
|---|---|---|---|
| 19 | 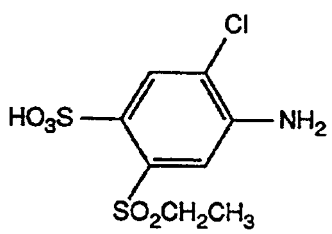 | 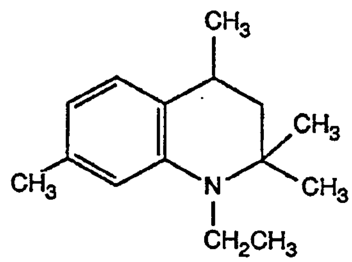 | Rot |
| 20 | 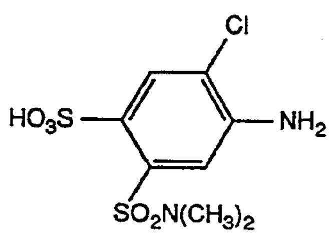 | 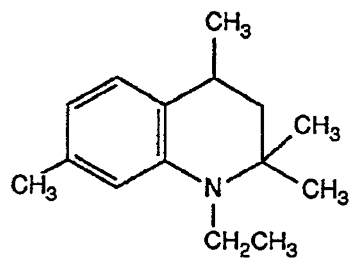 | gelbstichig Rot |
| 21 | 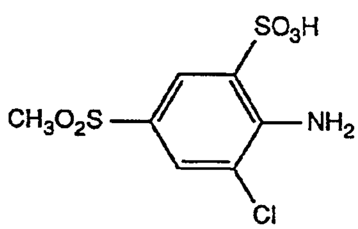 | 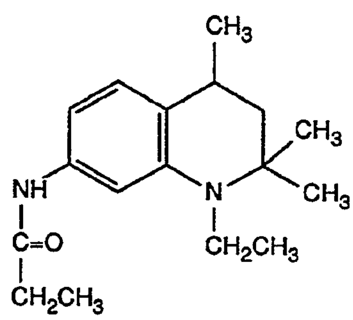 | Orange |
| 22 | 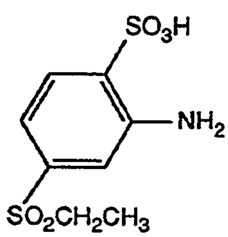 | 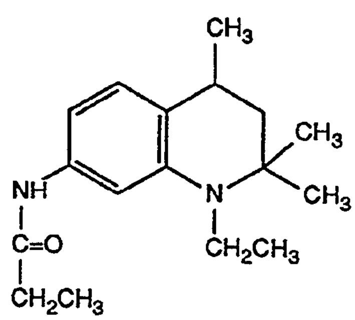 | gelbstichig Rot |

Fortsetzung Tabelle

| Bsp. | Amin | Kupplungskomponente | Farbton auf natürlichem und synthetischem Polyamid |
|---|---|---|---|
| 23 | 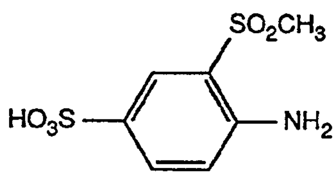 | 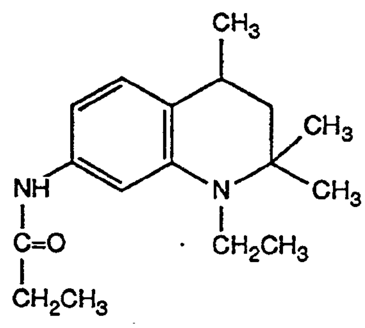 | gelbstichig Rot |
| 24 | 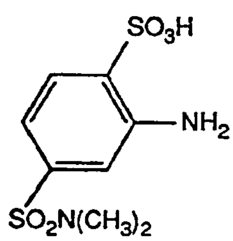 | 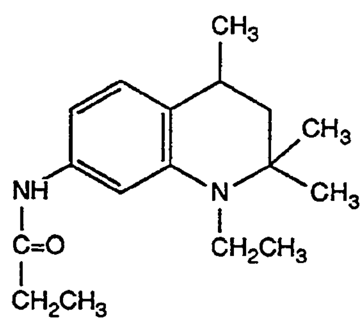 | Rot |
| 25 | 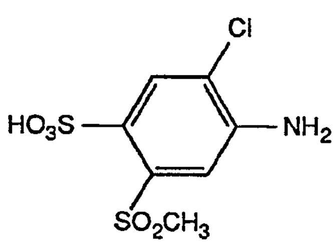 | 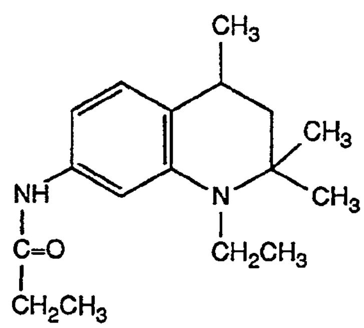 | Rot |

Fortsetzung Tabelle

| Bsp. | Amin | Kupplungskomponente | Farbton auf natürlichem und synthetischem Polyamid |
|---|---|---|---|
| 26 | 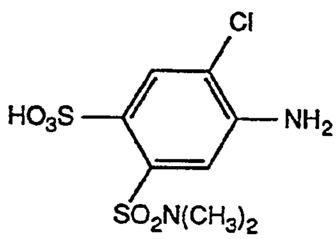 | 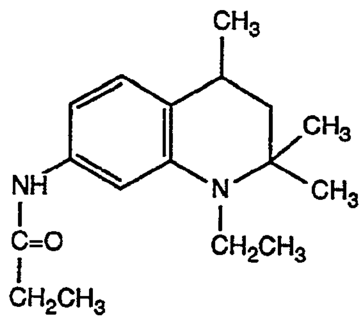 | gelbstichig Rot |
| 27 | 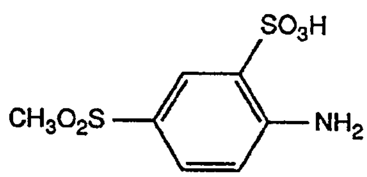 | 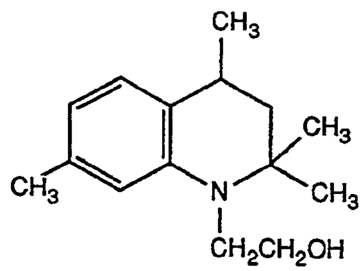 | gelbstichig Rot |
| 28 | 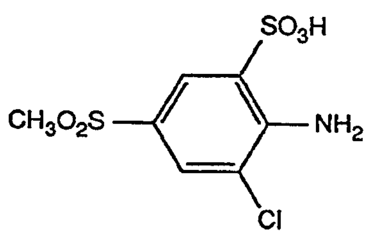 | 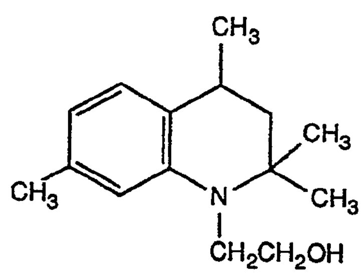 | Orange |
| 29 | 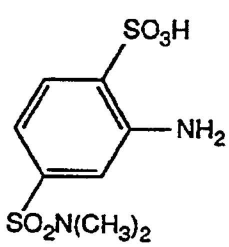 | 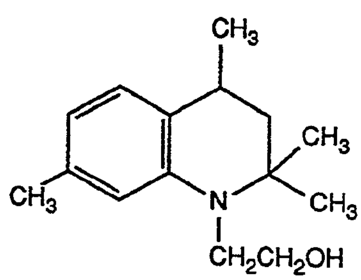 | gelbstichig Rot |

Fortsetzung Tabelle

| Bsp. | Amin | Kupplungskomponente | Farbton auf natürlichem und synthetischem Polyamid |
|---|---|---|---|
| 30 | 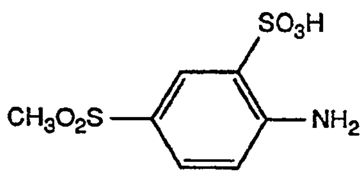 | 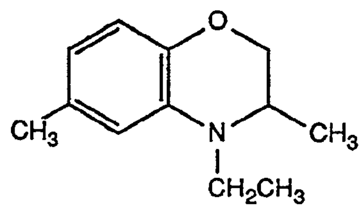 | gelbstichig Rot |
| 31 | 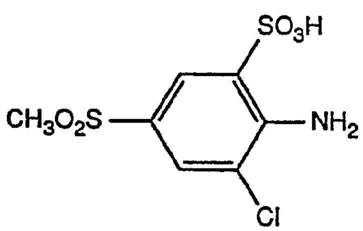 | 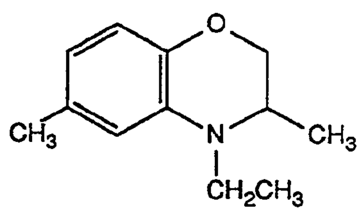 | Orange |
| 32 | 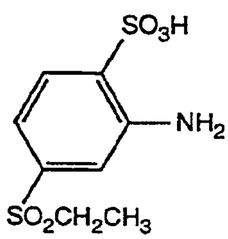 | 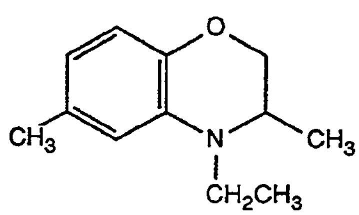 | gelbstichig Rot |

Fortsetzung Tabelle

| Bsp. | Amin | Kupplungskomponente | Farbton auf natürlichem und synthetischem Polyamid |
|---|---|---|---|
| 33 | 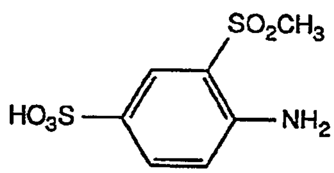 | 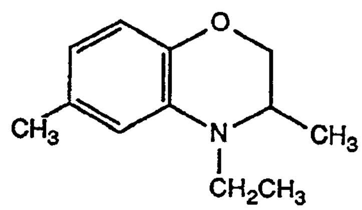 | gelbstichig Rot |
| 34 | 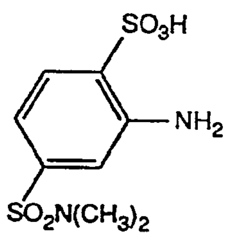 | 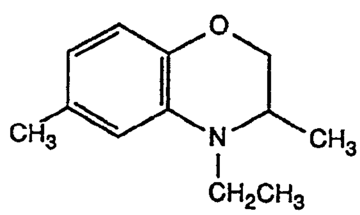 | gelbstichig Rot |
| 35 | 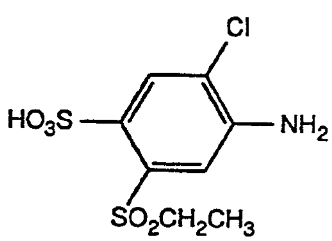 | 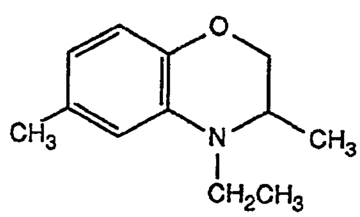 | Rot |

Fortsetzung Tabelle

| Bsp. | Amin | Kupplungskomponente | Farbton auf natürlichem und synthetischem Polyamid |
|---|---|---|---|
| 36 | 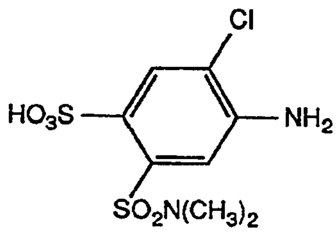 | 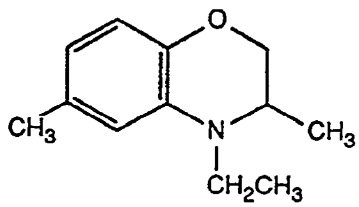 | gelbstichig Rot |
| 37 | 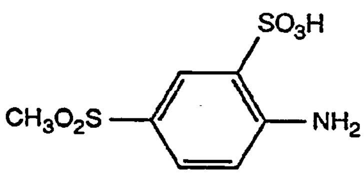 | 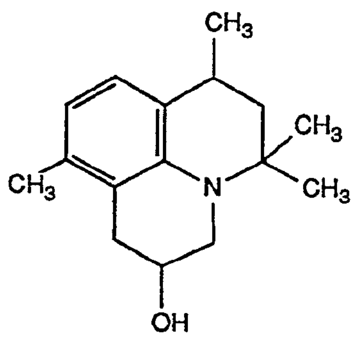 | Rot |
| 38 | 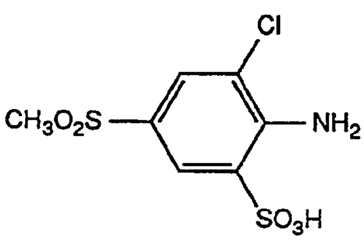 | 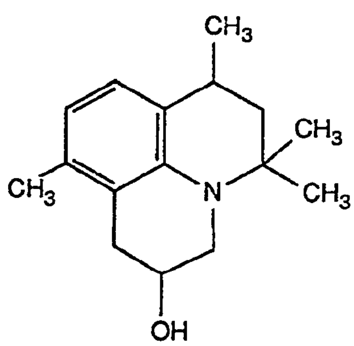 | gelbstichig Rot |

Fortsetzung Tabelle

| Bsp. | Amin | Kupplungskomponente | Farbton auf natürlichem und synthetischem Polyamid |
|---|---|---|---|
| 39 | 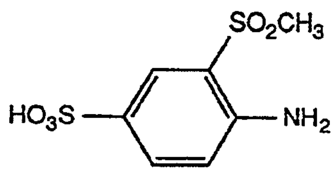 | 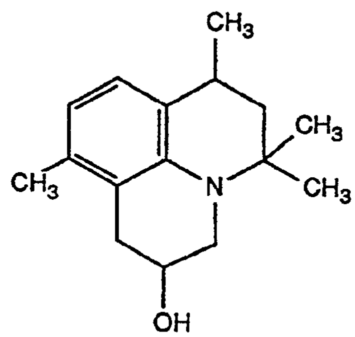 | Rot |
| 40 | 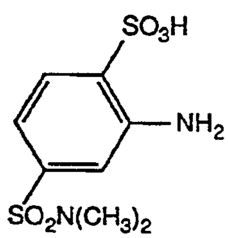 | 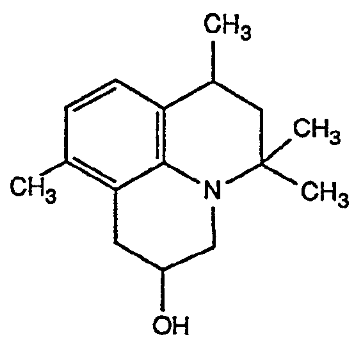 | Rot |
| 41 | 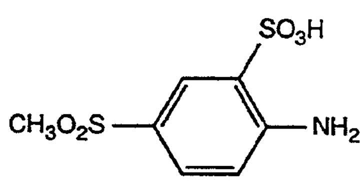 | 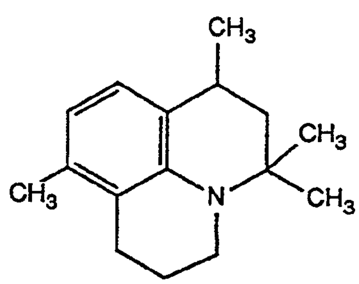 | Rot |
| 42 | 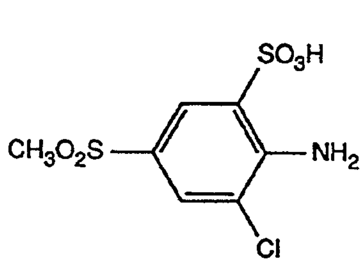 | 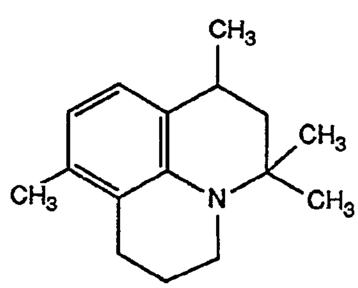 | Orange |

Fortsetzung Tabelle

| Bsp. | Amin | Kupplungskomponente | Farbton auf natürlichem und synthetischem Polyamid |
|---|---|---|---|
| 43 | 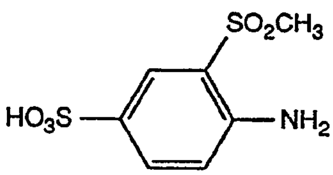 | 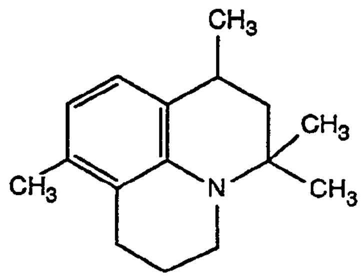 | Rot |
| 44 | 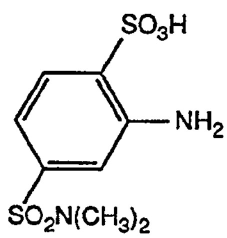 | 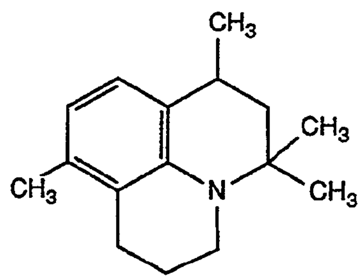 | Rot |
| 45 | 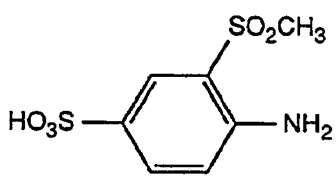 | 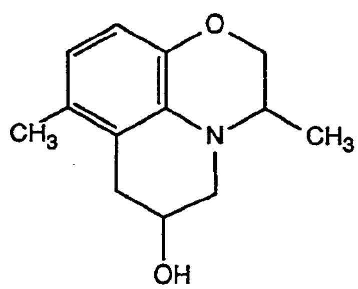 | Rot |
| 46 | 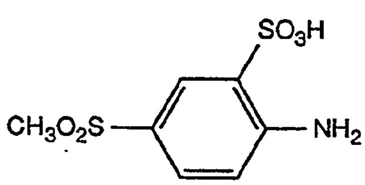 | 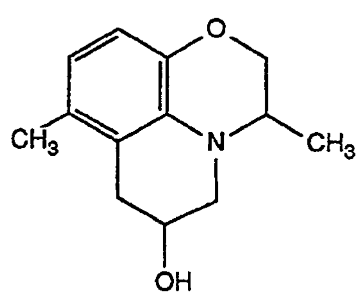 | Rot |

Fortsetzung Tabelle

| Bsp. | Amin | Kupplungskomponente | Farbton auf natürlichem und synthetischem Polyamid |
|---|---|---|---|
| 47 | 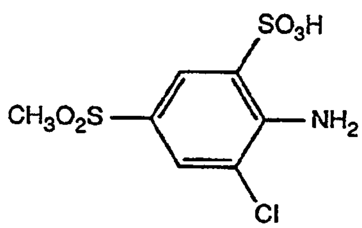 | 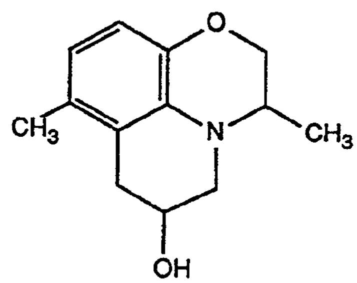 | gelbstichig Rot |
| 48 | 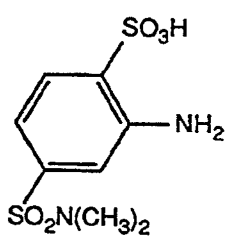 | 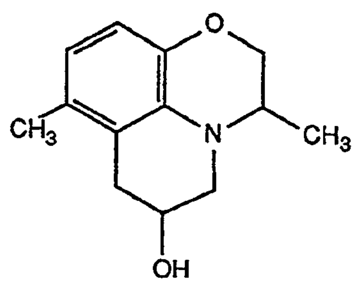 | Rot |
| 49 | 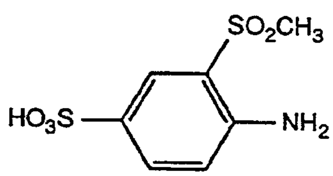 | 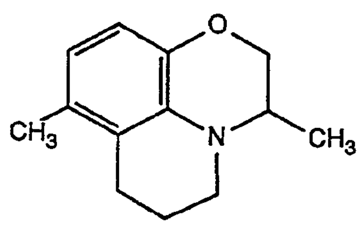 | Rot |
| 50 | 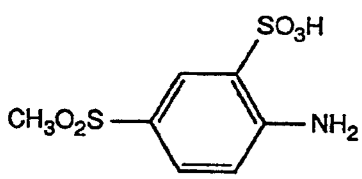 | 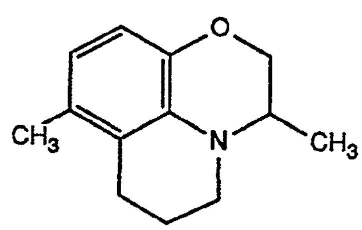 | Rot |

Fortsetzung Tabelle

| Bsp. | Amin | Kupplungskomponente | Farbton auf natürlichem und synthetischem Polyamid |
|---|---|---|---|
| 51 | 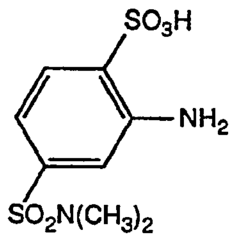 | 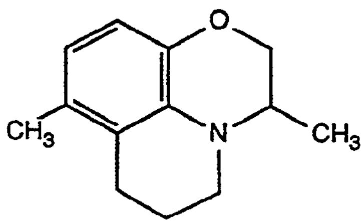 | Rot |
| 52 | 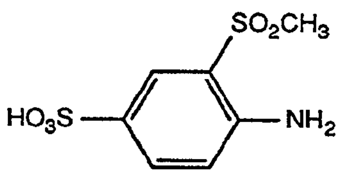 | 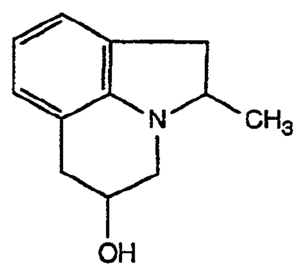 | Rot |
| 53 | 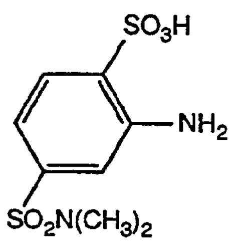 | 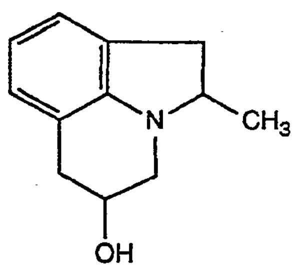 | Rot |

Färbevorschrift I

Man färbt 10 Teile Polyamid-6,6-Gewebe in 500 Teilen einer wässrigen Flotte, die 2 g/l Ammonacetat enthält und mit Essigsäure auf pH 5 gestellt wird. Der Anteil des Farbstoffs gemäss Beispiel 14 beträgt 0,7 % bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein gelbstichig rot gefärbtes Polyamid-6,6-Gewebe, das eine reine Nuance und gute Gesamtechtheiten aufweist.

Färbevorschrift II

Man färbt 10 Teile Polyamid-6,6-Gewebe in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 14 beträgt 1 %, bezogen auf das Fasergewicht. Die Färbedauer bei einer Temperatur von 98° beträgt 30 bis 90 Minuten. Das gefärbte Polyamid-6,6-Gewebe wird anschliessend herausgenommen und wie üblich gewaschen und getrocknet.

Man erhält ein gelbstichig rot gefärbtes Polyamid-6,6-Gewebe, das eine reine Nuance und gute Gesamtechtheiten aufweist.

Färbevorschrift III

Man färbt 10 Teile Wollgewebe in 500 Teilen einer wässrigen Flotte. Bezogen auf das Fasergewicht betragen die Anteile an Farbstoff 0,45 % gemäss Beispiel 14, an Glaubersalz kalz. 5 % und 80%-iger Essigsäure 2 %. Die Färbedauer bei einer Temperatur von 98° beträgt 30-60 Minuten. Das gelbstichig rot gefärbte, wie üblich gewaschene und getrocknete Wollgewebe weist sehr gute Allgemeinechtheiten auf.

**Patentansprüche**

1. Azofarbstoffe der Formel

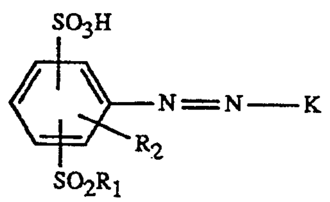

(1),

worin $R_1$ gegebenenfalls substituiertes $C_1$-$C_8$-Alkyl oder $-N(R_9)R_{10}$, wobei $R_9$ und $R_{10}$ unabhängig voneinander Wasserstoff, gegebenenfalls substituiertes $C_1$-$C_8$-Alkyl, Phenyl oder Naphthyl sind, $R_2$ Wasserstoff, Halogen, gegebenenfalls substituiertes $C_1$-$C_8$-Alkyl oder $C_1$-$C_8$-Alkoxy und K der Rest einer Kupplungskomponente der Formel

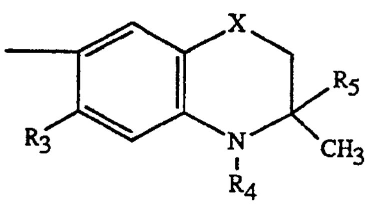

(2) oder

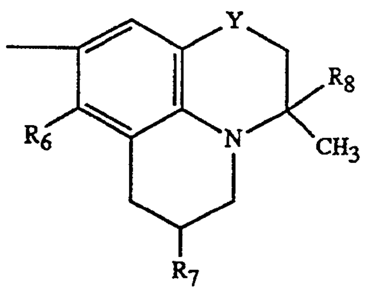

(3) ist,

worin $R_3$ und $R_6$ unabhängig voneinander Wasserstoff, gegebenenfalls substituiertes $C_1$-$C_8$-Alkyl, $C_1$-$C_8$-Alkoxy, Phenoxy oder $C_2$-$C_4$-Alkanoylamino, $R_4$ gegebenenfalls substituiertes $C_1$-$C_8$-Alkyl, $R_5$ und $R_8$ unabhängig voneinander Wasserstoff oder gegebenenfalls substituiertes $C_1$-$C_8$-Alkyl, $R_7$ Wasserstoff, Hydroxy, Halogen oder $C_1$-$C_8$-Alkoxy, X -O- oder $-CHR_{11}-$ und Y -O-, $-CHR_{11}-$ oder die direkte Bindung ist, wobei $R_{11}$ Wasserstoff oder gegebenenfalls substituiertes $C_1$-$C_8$-Alkyl bedeutet.

2. Azofarbstoffe gemäss Anspruch 1, worin $R_1$ $C_1$-$C_4$-Alkyl, $-NHC_1$-$C_4$-Alkyl oder $-N(C_1$-$C_4$-$Alkyl)_2$ ist.

3. Azofarbstoffe gemäss einem der Ansprüche 1 und 2, worin $R_2$ Wasserstoff oder Halogen, insbesondere Chlor, ist.

4. Azofarbstoffe gemäss einem der Ansprüche 1 bis 3, worin $R_3$ Wasserstoff, $C_1$-$C_4$-Alkyl oder $C_2$-$C_4$-Alkanoylamino und $R_5$, $R_8$ und $R_6$ unabhängig voneinander Wasserstoff oder $C_1$-$C_4$-Alkyl sind.

5. Azofarbstoffe gemäss einem der Ansprüche 1 bis 4, worin $R_4$ gegebenenfalls durch Hydroxy substituiertes $C_1$-$C_4$-Alkyl ist.

6. Azofarbstoffe gemäss einem der Ansprüche 1 bis 5, worin X und Y unabhängig voneinander -O- oder -$CHCH_3$- sind.

7. Azofarbstoffe gemäss einem der Ansprüche 1 bis 6, worin $R_7$ Wasserstoff oder Hydroxy ist.

8. Azofarbstoffe gemäss Anspruch 1, worin $R_1$ $C_1$-$C_4$-Alkyl oder -N($C_1$-$C_4$-Alkyl)$_2$, $R_2$ Wasserstoff oder Halogen, insbesondere Chlor, ist, $R_3$ $C_1$-$C_4$-Alkyl oder $C_2$-$C_4$-Alkanoylamino, $R_4$ gegebenenfalls durch Hydroxy substituiertes $C_1$-$C_4$-Alkyl, $R_5$, $R_6$ und $R_8$ unabhängig voneinander Wasserstoff oder $C_1$-$C_4$-Alkyl, $R_7$ Wasserstoff oder Hydroxy und X und Y unabhängig voneinander -O- oder -$CHCH_3$- sind.

9. Azofarbstoffe gemäss Anspruch 8, worin $R_1$ Methyl, Aethyl oder -N($CH_3$)$_2$, $R_2$ Wasserstoff oder Chlor, $R_3$ Methyl oder Propionylamino, $R_4$ gegebenenfalls durch Hydroxy substituiertes Aethyl und $R_5$, $R_6$ und $R_8$ unabhängig voneinander Wasserstoff oder Methyl sind.

10. Azofarbstoffe gemäss einem der Ansprüche 1 bis 9, worin K der Rest einer Kupplungskomponente der Formel (2) ist.

11. Verfahren zur Herstellung von Azofarbstoffen gemäss Anspruch 1, dadurch gekennzeichnet, dass man ein Amin der Formel

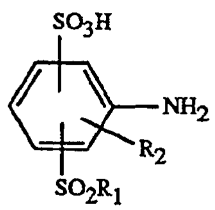

(4),

worin $R_1$ und $R_2$ die in Anspruch 1 angegebenen Bedeutungen haben, diazotiert und auf eine Kupplungskomponente der Formel

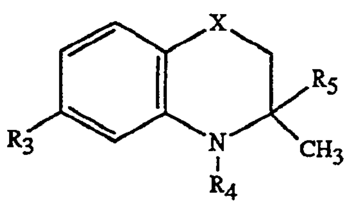

(5) oder

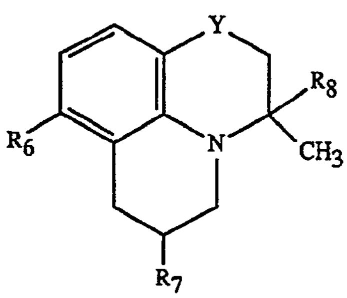

(6),

worin $R_3$, $R_4$, $R_5$, $R_6$, $R_7$, $R_8$, X und Y die in Anspruch 1 angegebenen Bedeutungen haben, kuppelt.

12. Verwendung der Azofarbstoffe gemäss den Ansprüchen 1 bis 10 bzw. der gemäss Anspruch 11 erhaltenen Azofarbstoffe zum Färben oder Bedrucken von Fasermaterialien.

**Patentansprüche für folgenden Vertragsstaat: ES**

1. Verfahren zur Herstellung von Azofarbstoffen der Formel

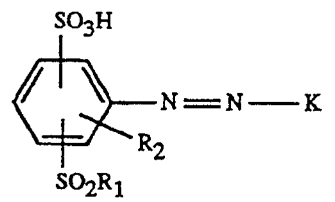

(1),

worin $R_1$ gegebenenfalls substituiertes $C_1$-$C_8$-Alkyl oder -$N(R_9)R_{10}$, wobei $R_9$ und $R_{10}$ unabhängig voneinander Wasserstoff, gegebenenfalls substituiertes $C_1$-$C_8$-Alkyl, Phenyl oder Naphthyl sind, $R_2$ Wasserstoff, Halogen, gegebenenfalls substituiertes $C_1$-$C_8$-Alkyl oder $C_1$-$C_8$-Alkoxy und K der Rest einer Kupplungskomponente der Formel

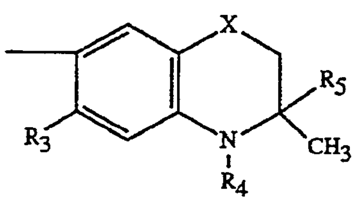

(2) oder

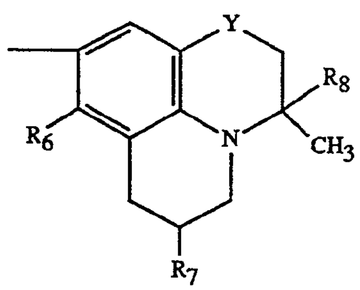

(3) ist,

worin $R_3$ und $R_6$ unabhängig voneinander Wasserstoff, gegebenenfalls substituiertes $C_1$-$C_8$-Alkyl, $C_1$-$C_8$-Alkoxy, Phenoxy oder $C_2$-$C_4$-Alkanoylamino, $R_4$ gegebenenfalls substituiertes $C_1$-$C_8$-Alkyl, $R_5$ und $R_8$ unabhängig voneinander Wasserstoff oder gegebenenfalls substituiertes $C_1$-$C_8$-Alkyl, $R_7$ Wasserstoff, Hydroxy, Halogen oder $C_1$-$C_8$-Alkoxy, X -O- oder -$CHR_{11}$- und Y -O-, -$CHR_{11}$- oder die direkte Bindung ist, wobei $R_{11}$ Wasserstoff oder gegebenenfalls substituiertes $C_1$-$C_8$-Alkyl bedeutet, dadurch gekennzeichnet, dass man ein Amin der Formel

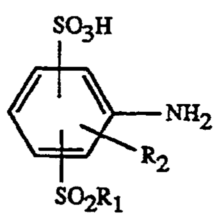

(4),

worin $R_1$ und $R_2$ die unter Formel (1) angegebenen Bedeutungen haben, diazotiert und auf eine Kupplungskomponente der Formel

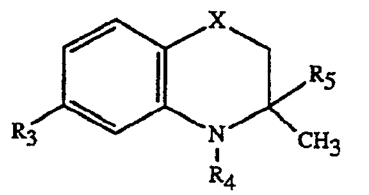

(5) oder

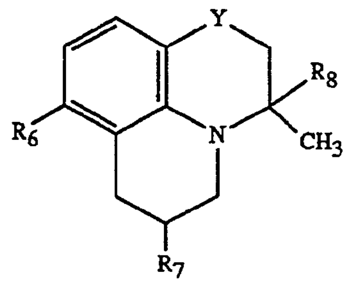

(6),

worin $R_3$, $R_4$, $R_5$, $R_6$, $R_7$, $R_8$, X und Y die oben angegebenen Bedeutungen haben, kuppelt.

2. Verfahren gemäss Anspruch 1, dadurch gekennzeichnet, dass man ein Amin der Formel (4) verwendet, worin $R_1$ $C_1$-$C_4$-Alkyl, -$NHC_1$-$C_4$-Alkyl oder -$N(C_1$-$C_4$-$Alkyl)_2$ ist.

3. Verfahren gemäss einem der Ansprüche 1 und 2, dadurch gekennzeichnet, dass man ein Amin der Formel (4) verwendet, worin $R_2$ Wasserstoff oder Halogen, insbesondere Chlor, ist. .

4. Verfahren gemäss einem der Ansprüche 1 bis 3, dadurch gekennzeichnet, dass man eine Kupplungskomponente der Formel (5) oder (6) verwendet, worin $R_3$ Wasserstoff, $C_1$-$C_4$-Alkyl oder $C_2$-$C_4$-Alkanoylamino und $R_5$, $R_6$ und $R_8$ unabhängig voneinander Wasserstoff oder $C_1$-$C_4$-Alkyl sind.

5. Verfahren gemäss einem der Ansprüche 1 bis 4, dadurch gekennzeichnet, dass man eine Kupplungskomponente der Formel (5) verwendet, worin $R_4$ gegebenenfalls durch Hydroxy substituiertes $C_1$-$C_4$-Alkyl ist.

6. Verfahren gemäss einem der Ansprüche 1 bis 5, dadurch gekennzeichnet, dass man eine Kupplungskomponente der Formel (5) oder (6) verwendet, worin X und Y unabhängig voneinander -O- oder -$CHCH_3$- sind.

7. Verfahren gemäss einem der Ansprüche 1 bis 6, dadurch gekennzeichnet, dass man eine Kupplungskomponente der Formel (6) verwendet, worin $R_7$ Wasserstoff oder Hydroxy ist.

8. Verfahren gemäss Anspruch 1, dadurch gekennzeichnet, dass man ein Amin der Formel (4), worin $R_1$ $C_1$-$C_4$-Alkyl oder -$N(C_1$-$C_4$-$Alkyl)_2$ und $R_2$ Wasserstoff oder Halogen, insbesondere Chlor, ist, diazotiert und auf eine Kupplungskomponente der Formel (5) oder (6), worin $R_3$ $C_1$-$C_4$-Alkyl oder $C_2$-$C_4$-Alkanoylamino, $R_4$ gegebenenfalls durch Hydroxy substituiertes $C_1$-$C_4$-Alkyl, $R_5$, $R_6$ und $R_8$ unabhängig voneinander Wasserstoff oder $C_1$-$C_4$-Alkyl, $R_7$ Wasserstoff oder Hydroxy und X und Y unabhängig voneinander -O- oder -$CHCH_3$- sind, kuppelt.

9. Verfahren gemäss Anspruch 8, dadurch gekennzeichnet, dass man ein Amin der Formel (4) verwendet, worin $R_1$ Methyl, Aethyl oder -$N(CH_3)_2$ und $R_2$ Wasserstoff oder Chlor ist, und eine Kupplungskomponente der Formel (5) oder (6) verwendet, worin $R_3$ Methyl oder Propionylamino, $R_4$ gegebenenfalls durch Hydroxy substituiertes Aethyl und $R_5$, $R_6$ und $R_6$ unabhängig voneinander Wasserstoff oder Methyl sind.

10. Verfahren gemäss einem der Ansprüche 1 bis 9, dadurch gekennzeichnet, dass man eine Kupplungskomponente der Formel (5) verwendet.

11. Verwendung der gemäss den Ansprüchen 1 bis 10 erhaltenen Azofarbstoffe zum Färben oder Bedrucken von Fasermaterialien.

Europäisches Patentamt

# EUROPÄISCHER RECHERCHENBERICHT

Nummer der Anmeldung

EP 91 81 0369

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 817 565 (CIBA-GEIGY AG)<br>* Ansprüche 1-10,12,14,15; Beispiele 27,30,65-79 * | 1-12 | C09B29/36<br>C09B29/00 |
| A | DE-A-3 840 113 (CIBA-GEIGY AG)<br>*Beispiele 2,8-11,14,15,19,20,22,24*<br>* Ansprüche 1-13 * | 1-12 | |
| A | DE-A-3 936 250 (CIBA-GEIGY AG)<br>*Ansprüche; Beispiele* | 1-12 | |
| A | DE-A-3 914 430 (CIBA-GEIGY AG)<br>*Ansprüche; Beispiele* | 1-12 | |
| | | | RECHERCHIERTE SACHGEBIETE (Int. Cl.5 ) |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1991 | GINOUX C.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)